(19) Europäisches Patentamt
European Patent Office
Office européen des brevets

(11) Veröffentlichungsnummer: **0 442 086 A2**

# (12) EUROPÄISCHE PATENTANMELDUNG

(21) Anmeldenummer: **90124182.8**

(22) Anmeldetag: **14.12.90**

(51) Int. Cl.5: **C08G 64/18**, C08C 19/38, C08L 69/00, //(C08L69/00,87:00)

(30) Priorität: **15.02.90 DE 4004676**

(43) Veröffentlichungstag der Anmeldung: **21.08.91 Patentblatt 91/34**

(84) Benannte Vertragsstaaten: **DE ES FR GB IT NL**

(71) Anmelder: **BAYER AG**

**W-5090 Leverkusen 1 Bayerwerk(DE)**

(72) Erfinder: **Dujardin, Ralf, Dr.**
**Bodelschwinghstrasse 18**
**W-4150 Krefeld(DE)**
Erfinder: **Weider, Richard, Dr.**
**Quettinger Strasse 78**
**W-5090 Leverkusen 3(DE)**
Erfinder: **Horlacher, Peter, Dr.**
**Ginsterweg 4**
**W-7913 Senden(DE)**
Erfinder: **Nouvertné, Werner, Dr.**
**Burgstrasse 17b**
**W-4150 Krefeld(DE)**

## (54) Pfropfcopolymere, ihre Herstellung und Verwendung.

(57) Gegenstand der vorliegenden Erfindung sind Polycarbonat gepfropfte Kautschuke, ein Verfahren zu ihrer Herstellung, ihre Verwendung als Zusätze für aromatische Polycarbonate, diese Zusätze enthaltende Polycarbonatgemische sowie die Modifizierung von Polycarbonaten durch OH-Gruppen-haltige Kautschuke.

EP 0 442 086 A2

## PFROPFCOPOLYMERE, IHRE HERSTELLUNG UND VERWENDUNG

Unter Pfropfcopolymere versteht man Polymere mit verzweigten Grundeinheiten, bei denen verschiedenartige, oft miteinander unverträgliche Polymere durch chemische Bindungen miteinander verknüpft werden, wodurch Produkte mit neuen Eigenschaftskombinationen entstehen.

Pfropfcopolymere, die sich nur von Polymerisaten ableiten, sind gut bekannt (G. Riess in "Encyclopedia of Polymer Science and Engineering", 2nd Ed. Vol. 2., S. 324-434, 1985 und darin zitierte Literatur), während Polymerkombinationen von Polymerisaten als Pfropfgrundlage und Polykondensaten als aufgepfropfte Seitenketten bisher weniger untersucht wurden (Polymer Science and Technology, Vol. 4 "Recent Advances in Polymer Blends, Grafts and Blocks", ed. by L.H. Sperling, Plenum Press New York, London 1974). Im letzteren Fall liegt eine gewisse Schwierigkeit darin, geeignete Monomere in das Polymerisat-Rückgrat einzupolymerisieren, die bei einer Polykondensation mitreagieren, während im ersten Fall radikalische Pfropfungen am unmodifiziertem Polymerrückgrad durchführbar sind.

Für die Aufpropfung von Polycarbonatketten sind phenolische OH-Gruppen am Polymerrückgrad unter dem Aspekt von Stabilität, Reaktivität, also Einheitlichkeit der erhaltenen Pfropfcopolymeren und resultierend daraus unter dem Aspekt der mechanischen Eigenschaften der erhaltenen Pfropfcopolymeren von Wichtigkeit.

Derartige Pfropfreaktionen auf Polymere mit phenolischen OH-Gruppen sind bekannt (siehe beispielsweise DE-AS 1 770 144 (Le A 11 295) beziehungsweise US-Patent 3 687 895, DE-OS 2 357 192 (Le A 15 222), DE-OS 3 717 172 (Le A 25 000) und EP-OS 0 293 908) oder beispielsweise Gegenstand der deutschen Patentanmeldung p 3 911 222.5 (Le A 26 692).

Aus der DE-OS 2 702 626 (Le A 17 356) ist die Herstellung von hochmolekularen, segmentierten Polycarbonat-Elastomeren bekannt, wobei die elastischen Segmente über COOH-Polymerisate eingeführt werden, die 1 bis 5 COOH-Gruppen haben.

Aus der DE-OS 2 712 230 (Le A 17 926) sind verzweigte Segmentpolymere bekannt, wobei verzweigte oder partiell vernetzte, lebende Vinylaromat-Dien-Blockpolymeranionen mit speziellen aromatischen Polycarbonaten umgesetzt werden.

Es wurde nun gefunden, daß thermoplastische verarbeitbare Pfropfcopolymere auf der Basis von hydroxyphenylfunktionalisierten Kautschuken mit aufgepfropften Polycarbonatseitenästen, sogar auf Basis hochmolekularer Polymerrückgrate erhältlich sind, welche eine ideale Eigenschaftskombination, nämlich kautschuktypische Lösungsmittelbeständigkeit bei zähem Thermoplasteigenschaftsbild in sich vereinigen.

Die als Polymerrückgrat einzusetzanden Kautschuke sowie deren Herstellung sind Gegenstand der deutschen Patentanmeldung P 40 00 625.5 (Le A 27 441).

Einzelheiten sind dem nachstehend aufgeführten Wortlaut dieser deutschen Patentanmeldung P 40 00 625.5 auf den Seiten 3 bis 15 der vorliegenden Patentanmeldung zu entnehmen.

Gegenstand der deutschen Patentanmeldung P 40 00 625.5 Erfindung ist ein Verfahren zur Herstellung eines Kautschuks mit 5 bis 60, vorzugsweise mit 5 bis 40, phenolischen OH-Gruppen, das dadurch gekennzeichnet ist, daß man Kautschuke mit einem Doppelbindungsgehalt zwischen 3 und 250 pro 1.000 C-Atomen im Kautschuk, vorzugsweise zwischen 3 und 10 pro 1.000 C-Atomen im Kautschuk, mit Phenolen, gegebenenfalls in Gegenwart eines Katalysators, in Substanz bei Temperaturen zwischen 50 °C und 150 °C, vorzugsweise von 70 °C bis 130 °C und Reaktionszeiten zwischen 1 Minute und 30 Minuten umsetzt. Das Reaktionsprodukt wird in üblicher Weise abgekühlt und granuliert.

Gegenstand der deutschen Patentanmeldung P 40 00 625.5 Erfindung sind auch die nach dem erfindungsgemäßen Verfahren erhältlichen Kautschuke.

### Stand der Technik

Aus JA 63/268 703 sind Kohlenwasserstoffpolymere wie hydriertes Polybutadien bekannt, die endständig oder als aufgefropfte Seitenketten Kohlenwasserstoffketten mit Hydroxyphenylendgruppen tragen. Diese werden beispielsweise aus hydriertem Polybutadien mit alkoholischen OH-Gruppen und Methylsalicylat in Gegenwart von p-Toluolsulfonsäure hergestellt. Die Hydroxyphenylendgruppen können aber auch bei der Synthese der Kohlenwasserstoffketten via anionische Polymerisation von Dienen unter Einbeziehung von Parahydroxystyrol dessen Hydroxygruppe vorübergehend maskiert ist, eingeführt werden.

Aus JA 52/009 098 (nur als Auszug vorliegend) sind Reaktionsprodukte von Kautschuken mit Phenolen in Gegenwart von Friedel-Crafts-Katalysatoren bekannt, welche zu Polyphenylenoxiden durch oxidative Kupplung umgesetzt werden.

Aus der DE-OS 3 509 093 bzw. aus der EP-A 0 195 199 sind Kohlenwasserstoffharz-Polyphenylenether-Kammpolymere bekannt.

Diese Kammpolymeren werden hergestellt, indem man Kohlenwaserstoffharze, also Kautschuke, mit Phenolen in Gegenwart einer Säure umsetzt (siehe Seite 8 der DE-OS 3 509 093).

Aus Beispiel 1 der DE-OS 3 509 093 ist ersichtlich, daß die Reaktion in Lösung erfolgt.

Derartige, säurekatalysierte Reaktionen in Lösung haben jedoch den Nachteil, daß die Phenole im Kern mehrfach durch die ungesättigten Gruppen der Kohlenwasserstoffharze alkyliert werden.

Um dies zu vermeiden, werden gemäß DE-OS 3 509 093 bzw. EP-A 0 195 199 nur spezielle Phenole eingesetzt, die aufgrund ihrer vorgegebenen Substitution nur einmal alkylierbar sind (siehe die Phenole (IV) auf Seite 8 und im Anspruch 1 der DE-OS 3 509 093).

Aus der EP-A 0 236 554 sind entsprechende Umsetzungsprodukte von Kohlenwaserstoffharzen mit Phenolen bekannt. Auch hier wird die Umsetzung nur in Lösung beschrieben. Hierbei zeigt sich wiederum (siehe die auf Seite 3 der EP-A-0 236 554 zitierte "Makromol Chem. 24, 205 ff (1972), insbesondere Seite 212), daß Mehrfachalkylierung stattfindet, die zur Vernetzung der Produkte führt. Es wurde nun überraschend gefunden, daß auch mehrfach alkylierbare, d.h. in mindestens zwei ortho- und/oder para-Positionen unsubstituierte Phenole sich ohne Vernetzung an Kautschuke anbinden lassen.

Geeignete Phenole für das Verfahren der deutschen Patentanmeldung P 40 00 625.5 sind vorzugsweise solche der Formel (I)

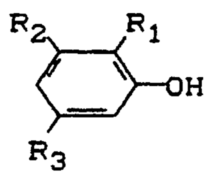

worin

$R_1$, $R_2$ und $R_3$ unabhängig voneinander, gleich oder verschieden sein können und H, $C_1$-$C_{12}$-Alkyl, Cyclohexyl, Phenyl, $C_1$-$C_{12}$-Alkoxy, $C_1$-$C_6$-Alkylphenyl, Phen-$C_1$-$C_6$-Alkyl, Fluor oder Chlor sind. $R_1$ und $R_2$ können außerdem einen cycloaliphatischen oder aromatischen, annellierten 6-Ring bilden.

Geeignete Phenole für das Verfahren sind vorzugsweise auch die der Formel (II)

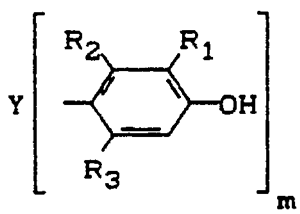

(II)

worin $R_1$ bis $R_3$ die für Formel (I) genannte Bedeutung haben, m 1 oder 2 ist und Y ein radikalisch reaktiver Rest ist.

Als radikalisch reaktiver Y-Rest soll im vorliegenden Zusammenhang vorzugsweise ein Alkenylrest, ein HS-Rest, ein Alkylmercaptanrest oder eine Polysulfidbrücke mit insbesondere 2 bis 8 S-Atomen sein.

Geeignete Phenole der Formel (I) sind beispielsweise Phenol; Chlorphenole wie 2-Chlorphenol, 3-Chlorphenol, 4-Chlorphenol, 2,5-Dichlorphenol; Alkylphenole wie technisches Kresol, 2-Methylphenol, 3-Methylphenol, 4-Methylphenol, 2,3-Dimethylphenol, 3,4-Dimethylphenol, 3,5-Dimethylphenol, 2,5-Dimethylphenol, 2,3,5-Trimethylphenol, 2-Ethylphenol, 2-Isopropylphenol, 3-Ethyl-5-methylphenol, 2-sec.-Butylphenol, 2-tert.-Butylphenol, 4-tert.-Butylphenol, 2-Isopropyl-5-methylphenol, 3-Isopropyl-5-methylphenol, 4-tert.-Pentylphenol, 4-(1,1,3,3-Tetramethylbutyl)-phenol, Nonylphenol, Dodecylphenol; 4-Cyclohexylphenol, 2-Cyclohexylphenol; 2-Phenylphenol, 4-Phenylphenol, 3-Phenylphenol; 5,6,7,8-Tetrahydro-1-naphthol, 1,1,3,3-Tetramethyl-5-indanol, 1-Naphthol, 1-Anthrol, Benzylphenol; 3-Methoxyphenol, 2-Methoxyphenol, 2-Ethoxyphenol, 2-Isopropoxyphenol und 4-Methoxyphenol.

Geeignete Phenole der Formel (II) sind beispielsweise 4-Mercaptophenol, 4-Methylmercaptophenol; Bis-(4-hydroxyphenyl)-disulfid, Bis-(4-hydroxyphenyl)-trisulfid, Bis-(4-hydroxy-3-methylphenyl)-disulfid, 4-Vinylphenol, 2-Methyl-4-vinylphenol, 3-Methyl-4-vinylphenol, 4-Isopropenylphenol, 2-Methyl-4-isopropenylphenol

und 4-(1-Buten-2-yl)-phenol.

Bevorzugte Phenole der Formeln (I) und (II) sind Phenol, 2-Methylphenol, 3-Methylphenol, 4-Methylphenol, Naphthol, 4-Isopropenylphenol und Bis-(4-hydroxyphenyl)disulfid.

Besonders bevorzugt ist Phenol.

Für die Umsetzung mit den Phenolen der Formel (I) geeignete Katalysatoren sind Protonensäuren wie beispielsweise Schwefelsäure, Phosphorsäure, phosphorige Säure, Halogenwasserstoffe, Perchlorsäure oder starke organische Säuren wie Alkyl- oder Arylsulfonsäure wie Methansulfonsäure, 2-Chlorethansulfonsäure, Trifluormethansulfonsäure, Perfluorbutan-1-sulfonsäure, Benzolsulfonsäure, Toluolsulfonsäure, Naphthalinsulfonsäure, 1,3-Benzoldisulfonsäure und Benzylsulfonsäure; Ameisensäure, Essigsäure, Trichloressigsäure oder Lewissäuren wie beispielsweise Bortrifluorid, Aluminiumchlorid, Zinkchlorid, Eisen(III)chlorid, Zinntetrachlorid, Titan(IV)chlorid oder Mischungen der genannten Katalysatoren.

Für die Umsetzung mit den Phenolen der Formel (II) geeignete Katalysatoren sind Azoverbindungen wie beispielsweise Azobis-isobutyronitril, 2,2'-Azobis(2,4-dimethyl-valeronitril), (1-Phenylethyl)-azodiphenylmethan, Dimethyl-2,2'-azobis-isobutyrat, 1,1'-Azobis-(1-cyclohexancarbonitril),2,2'-Azobis(2,4,4-trimethylpentan), 2,2'-Azobis(2-methylpropan) oder organische Peroxide wie beispielsweise Diacylperoxide wie Dilauroylperoxid, Diacetylperoxid, Dibenzoylperoxid; Peroxydicarbonate wie Dicetyl-peroxydicarbonat; Alkyl-perester wie tert.-Butyl-per-2-ethylhexanoat, tert.-Butyl-perisononanoat, tert.-Butyl-perbenzoat; Dialkylperoxide wie Dicumylperoxid, Di-tert.-butylperoxid, Di-(tert.-butylperoxiisopropyl)benzol; Alkylhydroperoxide wie Cumolhydroperoxid, tert.-Butylhydroperoxid oder Perketale und Keton-peroxide wie 2,2-Bis(tert.-butylperoxy)butan und Methylethylketonperoxid.

Bevorzugte Katalysatoren für Phenole der Formel (I) sind Alkyl- und Arylsulfonsäuren, besonders bevorzugt ist Methansulfonsäure.

Die Menge des Katalysators richtet sich nach der Art und der Menge des Phenols, der Reaktivität des verwendeten Kautschuks und dem gewünschten Phenolgehalt im Endprodukt und beträgt 0 bis 0,2, bevorzugt 0,05 bis 0,1 Mol pro Mol Phenol. Auf den Katalysator kann verzichtet werden, wenn das verwendete Phenol eine ausreichende Säurestärke besitzt. Die Reaktion mit den Reaktivphenolen erfolgt in der Regel ohne den Zusatz von Katalysatoren durch thermische Aktivierung der reaktiven Substituenten.

Nach dem beschriebenen Verfahren lassen sich eine große Zahl von Kautschuken mit Hydroxyphenylgruppen versehen.

Für das Verfahren der deutschen Patentanmeldung P 40 00 625.5 können Natur- oder Synthesekautschuke oder

Mischungen daraus, die ein $\overline{M}n$ von größer als 40.000 vorzugsweise von 40 000 bis 200 000 besitzen, verwendet werden. Es können Homopolymere eines Diens, Copolymere von mindestens zwei konjugierten Dienen, Copolymere von mindestens einem konjugierten Dien und mindestens einem anderen olefinischen Monomer, durch ringöffnende Polymerisation eines Cycloolefins erhaltene Polymere, Copolymere aus einem cyclischen, nichtkonjugierten Dien und mindestens einem anderen olefinischen Monomer, durch partielle Hydrierung der genannten Polymere erhaltene Polymere oder Mischungen hieraus eingesetzt werden. Im einzelnen seien genannt: Naturkautschuk, Synthesekautschuke wie Polybutadien, Styrol-Butadien-Kautschuke, Acrylnitril-Butadien-Katuschuke, teilhydrierte Acrylnitril-Butadienkautschuke, Polychloropren, Isopren-Isobutylen-Kautschuke halogenierte Copolymere aus Isopren und Isobutylen, Ethylen-Propylen-Dien-Kautschuke, Propylenoxid-Allylglycidether-Copolymere, Polyoctenylen und Polynorbornen.

Bevorzugt werden solche Polymere eingesetzt, die ein Terpolymer aus 20 bis 60 Gew.-% Propen, 40 bis 80 Gew.-% Ethen und 1,5 bis 13 Gew.-% eines Diens mit 4 bis 25 Kohlenstoffatomen, bevorzugt einem 5-Alkyliden-2-norbornen, in dem die Alkylidengruppe 2 bis 5 Kohlenstoffatome enthält darstellen und ein $\overline{M}n$ von größer als 40.000 besitzen.

Ebenfalls bevorzugt werden außerdem Copolymere aus 55 bis 85 Gew.-% Butdadien und 15 bis 45 Gew.-% Acrylnitril, bei denen 90 bis 99 % der vorhandenen Doppelbindungen durch Hydrierung abgesättigt wurden. Aus dieser Gruppe sind besonders bevorzugt Copolymere aus 55 bis 70 Gew.-% Butadien und 30 bis 45 Gew.-% Acrylnitril, bei denen 93 bis 97 % der vorhandenen Doppelbindungen durch Hydrierung abgesättigt wurden.

Gemäß deutsche Patentanmeldung P 40 00 625.5 geeignete Kautschuke sind insbesondere solche, die Mooney Viskositäten von mindestens 30, vorzugsweise von 30 bis 150 (gemessen nach DIN 53 523 (Teil 1-3); ASTM-D 1646-74 bei 100 °C) haben, die sie außer den geforderten $\overline{M}n$ von mindestens 40.000, vorzugsweise von 40 000 bis 200 000 erfüllen sollen.

Für das Verfahren ist das Verhältnis von Phenolen zu Kautschuken so zu bemessen, daß pro phenolische OH-Gruppe im Reaktionsprodukt 1 bis 5 Mol phenolisches OH in dem Reaktionsgemisch einzusetzen sind.

Die Durchführung des Verfahrens der deutschen Patentanmeldung P 40 00 625.5 erfolgt in Abwesenheit

eines Lösungsmittels durch intensives Vermischen der Komponenten. Das Mischen erfolgt dabei in einem für Kautschuk-oder Kunststoffverarbeitung üblichen Mischaggregat, z.B. einer Reaktionsschnecke, Extruder oder Kneter. Die Reaktionszeit beträgt dabei zwischen 1 und 30 Minuten. Gegebenenfalls kann überschüssiges Phenol nach der Reaktion in einer Vakuumstufe, durch Austreiben mit Wasserdampf oder durch Extraktion mit einem Lösungsmittel entfernt werden.

Die Mischtemperatur beträgt zwischen 50 °C und 150 °C, vorzugsweise 70 °C bis 130 °C. Das Reaktionsprodukt wird abgekühlt und kann dann in bekannter Weise granuliert oder kompaktiert werden.

Als zusätzliche Additive sind während oder nach der erfindungsgemäßen Umsetzung folgende an sich bekannte Substanzen einsetzbar:

Stabilisatoren wie Alterungs-, Ermüdungs- und Ozonschutzmittel, Weichmacher, Füllstoffe, Pigmente, Faktisse, Trennmittel oder Puderungsmittel sowie die in der Kautschukindustrie üblichen Vulkanisationshilfsmittel.

Die nach dem Verfahren der deutschen Patentanmeldung P 40 00 625.5 erhältlichen Kautschuke sind zu beliebigen Formkörpern vulkanisierbar, was in üblicher Weise mit den bekannten Methoden der Vulkanisation möglich ist.

Derartige Formkörper, beispielsweise Dichtungen sind wie übliche Kautschukartikel technisch einsetzbar.

Die gemäß deutscher Patentanmeldung P 40 00 625.5 erhältlichen Kautschuke sind aber auch, ohne vorherige Vulkanisation, als Mischungspartner in anderen Kautschuken einsetzbar, um beispielsweise deren Klebrigkeit zu verbessern.

Beispiele

Beispiel 1

Ein EPDM-Harz (Copolymer bestehend aus 50 Gew.-% Ethylen, 41 Gew.-% Propylen und 9 Gew.-% 5-Ethyliden-bicyclo-(2.2.1)-hept-2-en, Mooney Viskosität ML (1+4) bei 100 °C = 90, $\overline{M}_n$ ca. 95.000) wird in einer Zweiwellenschnecke, die in der Endzone mit einer Vakuumausdampfeinrichtung zur Entfernung des überschüssigen Phenols versehen ist, bei einer Zylindertemperatur von 90 °C mit 9 Gew.-% eines Gemisches aus Phenol und Methansulfonsäure (99 : 1) vermischt. Die Austrittstemperatur beträgt dabei ca. 120 °C, die mittlere Verweilzeit bis zur Vakuumstufe ca. 12 Minuten. Der austretende Strang wird durch ein Wasserbad gezogen, luftgetrocknet und anschließend unter Zusatz von 1 Gew.-% Talkum granuliert. Der Gehalt an gebundenem Phenol beträgt nach IR-Messungen 2,8 - 3,2 Gew.-%. Das rieselfähige Granulat ist gelfrei löslich und zu einem Walzfell verarbeitbar.

Beispiel 2

Ein EPDM-Harz (Copolymer, bestehend aus 68 Gew.-% Ethylen, 27 Gew.-% Propylen und 5 Gew.-% 5-Ethyliden-bicyclo-(2.2.1)-hept-2-en, Mooney Viskosität ML (1+4) bei 100 °C = 85, $\overline{M}_n$ ca. 50.000) wird wie in Beispiel 1 behandelt. Statt mit Talkum wird mit Bisphenol A-Polycarbonatpulver gepudert. Der Gehalt an gebundenem Phenol beträgt nach IR-Messungen 1,9 - 2,5 Gew.-%. Das Produkt ist gelfrei löslich und zu einem Walzfell verarbeitbar.

Beispiel 3

Beispiel 2 wird ohne Zugabe von Puderungsmitteln wiederholt. Durch schnelle Abkühlung auf ca. 20 °C bleibt das Granulat rieselfähig.

Beispiel 4

Dem EPDM-Harz aus Beispiel 1 wird bei Zugabe in die Schnecke 10 Gew.-% Bisphenol A-Polycarbonatpulver zugesetzt. Das so erhaltene Granulat bleibt ohne Puderung rieselfähig.

Beispiel 5

800 g des EPDM-Harzes aus Beispiel 1 werden in einem 1,3 l - Pomini-Kneter bei einer Manteltemperatur von 60 °C und einer Drehzahl von 40 l/min mastiziert. Nach 1 Minute werden 72 g Phenol, 7,2 g Methansulfonsäure und weitere 100 g EPDM-Harz zugegeben und weitere 8 min gemischt. Die Massetemperatur steigt dabei auf 90 - 100° C. Der Auswurf erfolgt in ein Wasserbad. Nach Entfernen des überschüssigen Phenols durch Extraktion mit Toluol/Methanol wird der Gehalt an gebundenem Phenol IR-spektroskopisch zu 3,2 Gew.-% bestimmt. Das Produkt ist gelfrei löslich und zu einem Walzfell verarbeitbar.

Beispiel 6

Insgesamt 900 g eines HNBR-Harzes (Copolymer aus 43 Gew.-% Acrylnitril und 57 Gew.-% Butadien, Mooney-Viskosität ML (1+4) bei 100° C = 75, $\overline{M}_n$ ca. 70.000, durch Hydrierung auf 4 % des ursprünglichen Doppelbindungsgehaltes reduziert) werden wie in Beispiel 4 behandelt. Der Gehalt an gebundenem Phenol wird IR-spektroskopisch zu 3,8 Gew.-% bestimmt. Das Produkt ist gelfrei löslich und zu einem Walzfell verarbeitbar.

Beispiel 7

45 g des EPDM-Harzes aus Beispiel 1 werden in einem 70 ml Kneter bei einer Manteltemperatur von 120° C und einer Drehzahl von 50 l/min mit 2,12 g Bis-(4-hydroxyphenyl)-disulfid versetzt und 10 Minuten gemischt. Das Rohprodukt wird mit Toluol/Ethanol extrahiert und der Gehalt an phenolischen Gruppen IR-spektroskopisch zu 2,8 Gew.-% bestimmt.

Beispiel 8

45 g des EPDM-Harzes aus Beispiel 1 werden in einem 70 ml Kneter bei einer Manteltemperatur von 120° C und einer Drehzahl von 50 l/min mit 2,3 g Isopropenylphenol versetzt und 10 Minuten gemischt. Das Rohprodukt wird mit Toluol/Ethanol extrahiert und der Gehalt an phenolischen Gruppen IR-spektroskopisch zu 1,7 Gew.-% bestimmt.

Gegenstand der vorliegenden Erfindung ist somit die Verwendung der nach dem Verfahren der deutschen Patentanmeldung P 40 00 625.5 (Le A 27 441) erhältlichen Kautschuke mit 5 bis 60, vorzugsweise 5 bis 40 phenolischen OH-Gruppen als Polymerrückgrate für die Herstellung von Pfropfcapolymeren unter Aufpfropfung von aromatischen Polycarbonaten.

Die Gewichtsmenge an jeweils einzusetzenden Kautschuken beträgt jeweils von 5 bis 65 Gew.-%, bezogen auf Gesamtgewicht des Pfropfcopolymeren.

Zusätzlich werden monofunktionelle Kettenabbrecher in Mengen von 0,1 Mol-% bis 10 Mol-%, vorzugsweise von 1 Mol-% bis 7 Mol-% und insbesondere von 2 Mol-% bis 5 Mol-%, bezogen jeweils auf Mole Diphenole, eingesetzt.

Während die Gewichtsmenge und OH-Zahl der Kautschuke die Zahl der aufgepfropften Polycarbonatketten bestimmt, reguliert die Menge an Diphenolen und monofunktionellem Kettenabbrecher die Länge also den Polymerisatiansgrad der aufgepfropften Polycarbonatketten.

Es ist hierbei außerdem erforderlich, den monofunktionellen Kettenabbrecher zeitlich so zu dosieren, daß die OH-Gruppen der Kautschuke weitgehend abreagieren.

Gegenstand der vorliegenden Erfindung ist außerdem ein Verfahren zur Herstellung der erfindungsgemäßen Pfropfcopolymeren aus Polymeren mit phenolischen OH-Gruppen, Diphenolen, Phosgen und Monophenolen in wäßrigalkalischer Phase unter Zusatz einer inerten organischen Lösungsmittels unter den Bedingungen der Zweiphasengrenzflächenpolykondensation, gegebenenfalls in Anwesenheit eines Katalysators, wobei die Menge an Diphenolen und Monophenolen als Kettenabbrecher so gewählt ist, daß Polycarbanatketten mit mittleren Molekulargewichten $\overline{M}n$ (Zahlenmittel, ermittelt durch Gelchromatographie nach vorheriger Eichung) von 2000 g/Mol bis 250 000 g/Mol, vorzugsweise von 5000 g/Mol bis 200 000 g/Mol und insbesondere von 7500 g/Mol bis 100 000 g/Mol gebildet werden, das dadurch gekennzeichnet ist, daß man als Polymere mit phenolischen OH-Gruppen die nach dem Verfahren der deutschen Patentanmeldung P 40 00 625.5 (Le A 27 441) erhältlichen Kautschuke mit 5 bis 60, vorzugsweise 5 bis 40 phenolischen OH-Gruppen einsetzt.

Gegenstand der vorliegenden Erfindung sind außerdem die nach dem erfindungsgemäßen Verfahren erhältlichen Pfropfcopolymeren.

Pro OH-Gruppe des Polymerrückgrads werden somit zwischen 8 Mol und 1000 Mol, vorzugsweise zwischen 20 Mol und 800 Mol und insbesondere zwischen 30 Mol und 400 Mol Diphenole eingesetzt; die Menge an Kettenabbrecher pro OH-Gruppe des Polymerrückgrats beträgt 1 Mol.

Als Diphenole, die in der Pfropfungsreaktion zum Aufbau der Polycarbonatseitenäste eingesetzt werden können, sind solche der Formel (III)

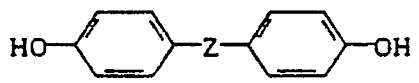

(III)

worin Z eine Einfachbindung, ein Alkylen-Rest mit 1 bis 8 C-Atomen, ein Alkyliden-Rest mit 2 bis 12 C-Atomen, ein Cycloalkyliden-Rest, ein Benzyliden-Rest, ein Methyl-benzyliden-Rest, ein Bis-(phenyl)-methylen-Rest, -S-, $-SO_2-$, -CO- oder -O- ist, wobei die durch Z verknüpften Phenylen-Kerne noch durch Methyl, Brom oder Chlor ein- oder zweifach substituiert sein können, und gegebenenfalls der Formel (IV) geeignet,

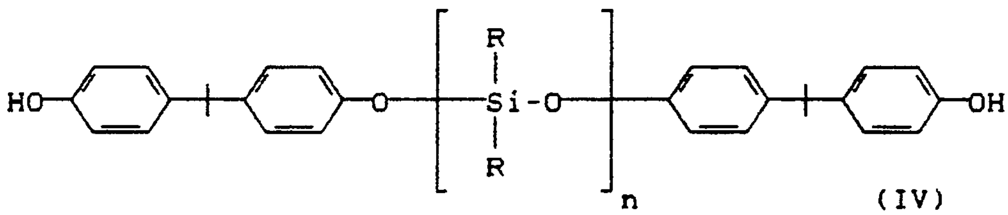

(IV)

worin
R = $C_1$-$C_4$-Alkyl, vorzugsweise $CH_3$-, und
n = 20 bis 200, vorzugsweise 40 bis 80 sind.

Geeignete Diphenole sind auch solche der Formel (V)

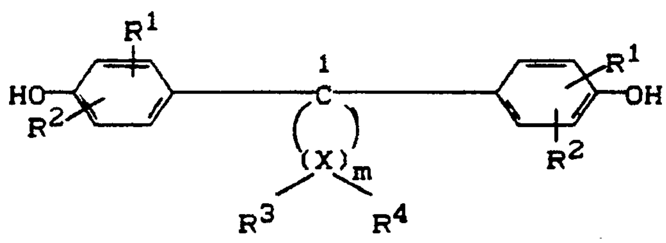

(V)

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl, |
| m | eine ganze zahl von 4 bis 7, bevorzugt 4 oder 5, |
| $R^3$ und $R^4$ | für jedes X individuell wählbar, unabhängig voneinander Wasserstoff oder $C_1$-$C_6$-Alkyl |

und
X Kohlenstoff bedeuten,
mit der Maßgabe, daß an mindestens einem Atom X $R^3$ und $R^4$ gleichzeitig Alkyl bedeuten.

Hierbei sind an 1 - 2 Atomen X, insbesondere nur an einem Atom X, $R^3$ und $R^4$ gleichzeitig Alkyl. Bevorzugter Alkylrest ist Methyl; die X-Atome in $\alpha$-Stellung zu dem Di-phenyl-substituierten C-Atom (C-1) sind bevorzugt nicht dialkylsubstituiert, dagegen ist die Alkyl-di-substitution in $\beta$-Stellung zu C-1 bevorzugt.

Insbesondere sind hierbei bevorzugt Dihydroxydiphenylcycloalkane mit 5 und 6 Ring-C-Atomen im cycloaliphatischen Rest (m = 4 oder 5 in Formel (V)) wie bei

spielsweise die Diphenole der Formeln

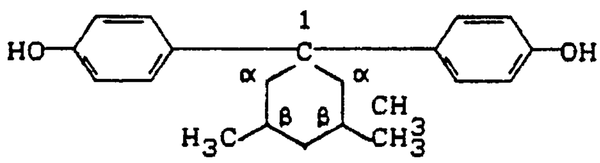

(V1),

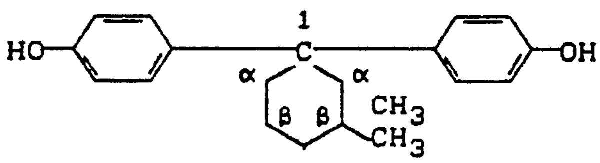

(V2)

und

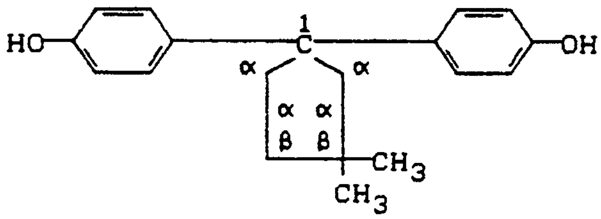

(V3),

wobei das 1,1-Bis-(-4-hydroxyphenyl)-3,3,5-trimethylcyclohexan (Formel V1) besonders bevorzugt ist.

Die Diphenole der Formel (V), ihre Herstellung und ihre Verwendung, gegebenenfalls in Kombination mit anderen Diphenolen, zur Herstellung von Homopolycarbonaten und Copolycarbonaten ist Gegenstand der deutschen Patentanmeldungen P 3 832 396.6 (Le A 26 344) und P 38 42 931.4 (Le A 26 318).

Beispiele für Diphenole der Formel (III) sind

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone und
Bis-(hydroxyphenyl)-sulfone sowie deren kernmethylierte,
kernbromierte und kernchlorierte Verbindungen.

Diese und weitere geeignete Diphenole der Formel (III) sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 0956, der französischen Patentschrift 1 561 518 und in der Monagraphie "H. Schnell, Chemistry and Physics of Polycarbonates, Interscience Publishers, New York 1964", beschrieben.

Bevorzugte Diphenole der Formel (III) sind beispielsweise:

4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,

2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
2,2-Bis-(3,5-dichlor-4-hydroxyphenyl)-propan und
2,2-Bis-(3,5-dibrom-4-hydroxyphenyl)-propan.

Besonders bevorzugte Diphenale der Formel (III) sind beispielsweise:

2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Insbesondere ist 2,2-Bis-(4-hydroxyphenyl)-propan als Diphenol der Formel (III) und 1,1-Bis-(4-hydroxyphenyl)-3,3,5-trimethylcyclohexan der Formel (V1) bevorzugt.

Die Diphenale der Formel (III) und (V) können sowohl einzeln als auch im Gemisch eingesetzt werden.

Diphenole der Formel (IV), die in Mengen von maximal 20 Gew.-%, bezogen auf Molsumme der einzusetzenden Diphenole, eingesetzt werden, sind beispielsweise in der EP-0 122 535 und in dem US-Patent 3 189 662 beschrieben.

Geeignete Diphenole der Formel (IV) sind bespielsweise solche der Formel (IVa)

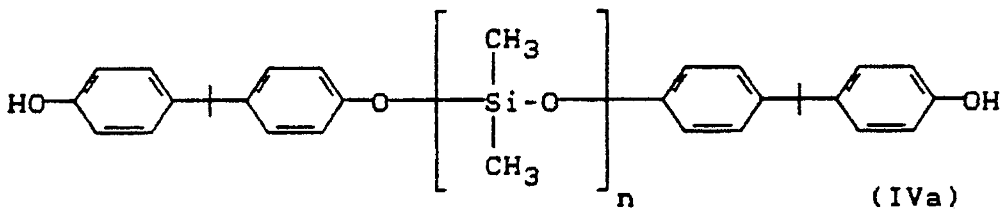

(IVa)

worin
n = 40, 60 oder 80 ist.

Geeignete Monophenole als Kettenabbrecher sind beispielsweise Phenol, p-tert.-Butylphenol, p-Cumylphenol und p-Iso-octylphenol.

Inerte organische Lösungsmittel für die Zweiphasengrenzflächen-Pfropfungsreaktion sind beispielsweise Methylenchlorid und Chlorbenzol.

Die Gewichtsmenge an inerten Lösungsmittel beträgt etwa das 20 - 25fache, bezogen auf die in der Pfropfungsreaktion eingesetzte Gewichtsmenge an Pfropfgrundlage. Die Menge an Lösungsmittel richtet sich nach der jeweils eingesetzten Gewichtsmenge an Pfropfgrundlage im herzustellenden Pfropfcopolymer; bei geringer Menge an Pfropfgrundlage reicht eine geringe Menge, bei einer höhreren Menge an Pfropfgrundlage im Pfropf wird eine größere Menge an Lösungsmittel benötigt.

Als wäßrige alkalische Phase dient beispielsweise wäßrige Natronlauge oder wäßrige Kalilauge.

Geeignete Katalysatoren für die Zweiphasengrenzflächen-Pfropfungsreaktion sind beispielsweise tertiäre Amine, wie z.B. Triethylamin oder N-Ethylpiperidin.

Für die Zweiphasengrenzflächen-Pfropfungsreaktion liegen die Reaktionszeiten zwischen 5 Minuten und 60 Minuten und geeignete Reaktionstemperaturen zwischen 0° C und 40° C.

Die nach dem erfindungsgemäßen Verfahren erhältlichen Pfropfcopolymeren haben Molekulargewichte $\overline{Mw}$ (Gewichtsmittel, ermittelt durch Lichtstreuung) von 80 000 bis 1.000.000.

Die nach dem erfindungsgemäßen Verfahren erhältlichen Pfropfcopolymeren sind insbesondere geeignet, die Benzinbeständigkeit von thermoplastischen, aromatischen Polycarbonaten zu verbessern.

Gegenstand der vorliegenden Erfindung ist somit auch die Verwendung der erfindungsgemäß erhältlichen Pfropfcopolymeren in Mengen von 0,1 Gew--X bis 35 Gew-, vorzugsweise von 5 Gew.-% bis 25 Gew.-%, bezogen auf Gesamtgewicht an Polycarbonatformmasse, zur Verbesserung der Benzinbeständigkeit von thermoplastischen aromatischen Polycarbonaten.

Gegenstand der vorliegenden Erfindung sind somit auch Mischungen enthaltend

A) thermoplastische, aromatische Polycarbonate mit $\overline{Mw}$ (Gewichtsmittelmolekulargewicht, ermittelt durch Gelpermeationschromatographie nach vorher Eichung) von 15.000 bis 40.000, vorzugsweise von 18.000 bis 35.000, und

B) die erfindungsgemäß erhältlichen Pfropfcopolymeren, wobei Komponente A) in Mengen von 65 Gew.-% bis 99,9 Gew.-% vorzugsweise von 75 Gew.-% bis 95 Gew.-% und Komponente B) in Mengen von 0,1 Gew.-% bis 35 Gew.-%, vorzugsweise von 5 Gew.-% bis 25 Gew.-% vorliegen und die Summe der Komponenten A) + B) in den Mischungen jeweils 100 Gew.-% ergeben.

Als thermoplastische, aromatische Polycarbonate gemäß Komponente A) sind alle aromatischen Homopolycarbonate und aromatischen Copolycarbonate geeignet, die linear oder in bekannter Weise verzweigt sind und die vorzugsweise aus den Diphenolen (III), (V) und gegebenenfalls (IV) beziehungsweise (IVa) in bekannter Weise hergestellt sind.

Derartige Polycarbonate sind entweder literaturbekannt oder nach bekannten Verfahren erhältlich oder Gegenstand der deutschen Patentanmeldungen P 38 32 396.6 (Le A 26 344) oder P 38 42 931.4 (Le A 26 318).

Die Polycarbonate der Komponenten A) enthalten natürlich nicht die nach dem Verfahren der deutschen Patentanmeldung P 40 00 625.5 (Le A 27 441) erhältlichen Kautschuke einkondensiert.

Zur Herstellung der erfindungsgemäßen Mischungen können die Polycarbonatkomponente A) und die Pfropfcopolymerkomponente B) oberhalb der Erweichungstemperatur der verwendeten Polycarbonatkomponente vermischt werden. Dies kann beispielsweise durch Compoundierung bei der Extrusion in den üblichen Schneckenmaschinen in einem einzigen Arbeitsgang erfolgen und zwar beispielsweise bei Temperaturen zwischen 280 und 350 °C. Zur Compoundierung eignen sich bekannte Apparaturen. Doppelschneckenextruder werden bevorzugt eingesetzt.

Weiterhin können die Mischungen über die Mischung der Lösungen der Komponenten A) und B) durch anschließendes gemeinsames Ausdampfen über einen Exdruder erfolgen.

Ein geeignetes Lösungsmittel für die Polycarbonatkomponente ist beispielsweise $CH_2Cl_2$, für die Pfropfcopolymerkomponente beispielsweise Methylenchlorid oder Chlorbenzol.

Gegenstand der vorliegenden Erfindung ist somit außerdem ein Verfahren zur Herstellung der erfindungsgemäßen Mischungen aus den thermoplastischen Polycarbonaten gemäß Komponente A) und den Pfropfcopolymeren gemäß Komponente B), das dadurch gekennzeichnet ist, daß man die Komponente A) und die Komponente B) oberhalb der Erweichungstemperatur der jeweiligen Komponente A) vermischt oder Lösungen der Polycarbonatkomponente A) mit Lösungen der Pfropfcopolymerkomponente B) vermischt und anschließend das Gemisch durch Ausdampfen in bekannter Weise vom Lösungsmittel befreit.

Wird bei gleichbleibendem Anteil an Polymerrückgrat mehr als 8-1000 Mol Diphenol und mehr als 1 Mol Kettenabbrecher pro OH-Gruppe des Polymerrückgrats eingesetzt, so entsteht neben den erfindungsgemäßen Pfropfcopolymeren auch Homopolycarbonat, so daß entsprechende Mischungen in einem Schritt erhalten werden (in situ-Blendherstellung). Durch die Menge an überschüssigem Diphenol kann der Gew.-Anteil an Homopolycarbonat in der Mischung mit den erfindungsgemäßen Pfropfcopolymeren eingestellt werden (0,5-99,5 % Homopolycarbonat).

Gegenstand der vorliegenden Erfindung ist somit auch ein Verfahren zur Herstellung von Polycarbonatgemischen bestehend aus Polycarbonatkomponenten A) und Pfropfcopolymerkomponenten B), und zwar durch Umsetzung von Diphenolen, monofunktionellen Kettenabbrechern, Phosgen und Polymeren mit phenolischen OH-Gruppen unter den Bedingungen der Zweiphasengrenzflächenpolykondensation in wäßrig alkaliscer Phase und inertem organischem Lösungsmittel, gegebenenfalls in Anwesenheit eines Katalysators bei Reaktionstemperaturen zwischen 0 °C und 40 °C und innerhalb Reaktionszeiten von 5 Minuten bis 60 Minuten, das dadurch gekennzeichnet ist, daß man

a) bei einer vorgegebenen Mol-Menge an OH-Gruppen-haltigen Polymeren,

b) Diphenole in Mengen von mehr als 1000 Mol pro OH-Gruppe des OH-Gruppen-haltigen Polymeren einsetzt, wobei die zusatzliche Menge an Diphenolen die Gewichtsmenge an Polycarbonat-Komponente A) im Gemisch mit der Pfropfcopolymerkomponente B) bestimmt, welche im Prinzip beliebig regulierbar ist, und beispielsweise 99,9 Gew.-% bis 65 Gew.-%, vorzugsweise 95 Gew.-% bis 75 Gew.-% bezogen auf Gewichtssumme von 100 Gew.-% aus A) + B), an Polycarbonat-Komponente A) beträgt,

c) Kettenabbrecher in Mengen von mehr als 1 Mol, pro OH-Gruppe des OH-Gruppen-haltigen Polymeren einsetzt, wobei die Menge an zusätzlichem Kettenabbrecher zur Herstellung der Polycarbonatkomponente A) aus den überschüssigen Diphenolen gemäß b) in bekannter Weise so zu bemessen ist, daß Molekulargewichte $\overline{M}w$ für die Polycarbonatkomponente A) von 15 000 bis 40 000, vorzugsweise von 18 000 bis 35 000 gebildet werden, und

d) als OH-Gruppen-haltige Polymere die nach dem Verfahren der deutschen Patentanmeldung P 40 00 625.5 (Le A 27 441) erhältlichen Kautschuke mit 5 bis 60, vorzugsweise 5 bis 40 phenolischen OH-Gruppen einsetzt, und nach beendeter Reaktion in bekannter Weise nach Abtrennung der wäßrigen Phase aufarbeitet.

Gegenstand der vorliegenden Erfindung sind außerdem die nach dem vorstehenden Verfahren hergestellten Polycarbonatgemische.

Aus der bereits eingangs zitierten japanischen Offenlegungsschrift der Mitsubishi Nr, 63/268 703 sind Kohlenwasserstoffpolymere mit Hydroxyphenylendgruppen als Additive zur Verbesserung der Verträglichkeit und der Haftung von Polymeren mit polaren Gruppen, wie Polyestern, Polyurethanen etc. einerseits und Polyolefinen andererseits bekannt,

Sie zeichnen durch Wärmeformbeständigkeit und chemische Beständigkeit aufgrund ihrer Struktur aus, und, indem man sie in aromatische Polyester, Polycarbonate etc. einpolymerisiert, verleihen sie Biegsamkeit und Kerbschlagzähigkeit diesen Harzen, Über die Art und Menge der Einpolymerisation wird im einzelnen nichts ausgeführt. Auch nicht über eine eventuelle Wirksamkeit zur Verbesserung der Benzinbeständigkeit von Polycarbonatharzen.

Die nach dem Verfahren der deutschen Patentanmeldung P 40 00 625.5 (Le A 27 441) erhältlichen Kautschuke mit 5 bis 60, vorzugsweise 5 bis 40 phenolischen OH-Gruppen können außerdem mit thermoplastischen, aromatischen Polycarbonaten unter Umesterung zu Polycarbonatformmassen reagieren, die die Kautschuke in Form von Polycarbonat-gepfropften Kautschuke chemisch eingebaut enthalten.

Diese Umesterungsreaktion erfolgt bei Temperaturen zwischen 280 °C und 350 °C beispielsweise in üblichen Schneckenmaschinen mit Entgasung unter Einhaltung von Reaktionszeiten von etwa 1 bis etwa 3 Min und ohne Verwendung von Katalysatoren.

Das Verhältnis der Reaktionspartner thermoplastisches aromatisches Polycarbonat zu OH-Gruppenhaltigem Kautschuk liegt zwischen 99,9:0,1 und 80:20, vorzugsweise zwischen 98:2 und 90:10.

Die erhaltenen Polycarbonatformmassen haben ebenfalls eine verbesserte Benzinbeständigkeit.

Gegenstand der vorliegenden Erfindung ist somit ein Verfahren zur Modifizierung von thermoplastischen, aromatischen Polycarbonaten mit $\overline{M}w$ (Gewichtsmittelmolekulargewicht, ermittelt durch Gelpemeationschromatigraphie nach vorheriger Eichung) von 15.000 bis 40.000 vorzugsweise von 18.000 bis 35.000, das dadurch gekennzeichnet ist, daß man die nach dem Verfahren der deutschen Patentanmeldung P 39 28 660.6 (Le A 26 793) erhältlichen Kautschuke mit 5 bis 60, vorzugsweise 5 bis 40 phenolischen OH-Gruppen in Mengen von 0,1 Gew.-% bis 20 Gew.-%, vorzugsweise von 2 Gew.-% bis 10 Gew.-%, bezogen auf Gesamtgewicht aus thermoplastischem aromatischem Polycarbonat und Kautschuk, bei Temperaturen zwischen 280 °C und 350 °C zwischen 1 und 3 Minuten, vorzugsweise zwischen 1,5 und 2 Minuten ohne Verwendung von Katalysatoren vermischt und das Gemisch anschließend extrudiert und in üblicher Weise aufarbeitet.

Gegenstand der vorliegenden Erfindung sind außerdem die nach dem erfindungsgemäßen Verfahren erhältlichen modifizierten Polycarbonatformmassen.

Als zu modifizierende thermoplastische, aromatische Polycarbonate eignen sich die als Komponente A) bereits definierten.

Die nach den erfindungsgemäßen Verfahren erhältlichen Polycarbonatformmassen können noch im Bedarfsfall die für Polycarbonate beziehungsweise für Kautschuke üblichen Additive wie Stabilisatoren gegen UV-Licht, Hitze und Feuchtigkeit, Flammschutzmittel, Alterungsschutzmittel, Entformungsmittel und/oder Füllstoffe in den üblichen Mengen enthalten. Die Einarbeitung dieser Additive erfolgt in der üblichen Weise beispielsweise analog in der bereits beschriebenen Compoundierung der Komponenten A) und B).

Die nach den erfindungsgemäßen Verfahren erhältlichen Polycarbonatformmassen können in bekannter Weise auf den üblichen Aggregaten zu beliebigen Formkörpern wie Spritzgußartikeln, Platten, Folien, Röhren verarbeitet werden.

Diese Formkörper aus den erfindungsgemäß erhältlichen Polycarbonatformmassen sind technisch einsetzbar, vor allem im Automobilbereich, wo Benzinbeständigkeit erforderlich ist, aber auch beispielsweise als Dichtungen für Leitungssysteme der verschiedensten Art also im Maschinen-und Anlagenbereich sowie auf dem Elektrosektor.

Die nachfolgenden Beispiele stellen lediglich eine begrenzte Auswahl für die Durchführbarkeit der vorliegenden Erfindung dar.

Im Rahmen der in der Beschreibung dargelegten Offenbarung ließen sich noch beliebig viele Ausführungsbeispiele durch erfindungsgemäße Permutation der einzelnen geforderten Parameter vorlegen.

Beispiele für die Herstellung von Pfropfpolymeren

Beispiel 1

a) Pfropfgrundlage

800 g eines EPDM-Harzes (hergestellt aus 46 Masse-% Ethylen, 45 Masse-% Propylen und 9 Masse-%

5-Ethyliden-bicyclo(2.2.1)-hept-2-en, Money-Viskosität (1+4) bei 100° C = 90 werden in einem Pomini-Kneter bei einer Knetertemperatur von 60° C und einer Drehzahl von 40 l/min mastiziert. Nach 1 min werden 72 g Phenol, 7,2 g Methansulfonsäure und weitere 100 g EPDM zugegegeben und weitere 8 min gemischt. Die Massetemperatur steigt dabei auf 90-100° C

Durch vollständige Extraktion des überschüssigen Phenols wird der gebundene Anteil zu 3,2 Gew.-% bestimmt. Im IR-Spektrum zeigt die Bande bei 1600 l/cm die Anwesenheit von aromatischen Seitengruppen an.

Die mittlere Anzahl an seitenständigen Hydroxyphenylgruppen wurde rechnerisch zu 27.23 bestimmt, bei einem Molekulargewicht des EPDM, ermittelt durch Gelpermeationschromatographie, von Mn = 80 000 g/mol.

b) Pfropfungsreaktion

Innerhalb von 1 Std. werden bei 20-25° C unter Rühren 2,70 kg (27 Mol) Phosgen in ein Gemisch aus 4,56 kg (20 Mol) 2,2-Bis-(4-hydroxyphenyl)-propan (BPA); 84,5 g = (2,9 Mol-% bezogen auf BPA) p-tert.-Butylphenol; 8 kg Natronlauge = w) 45 %); 40 l Wasser, 30 kg Chlorbenzol und 508 g (= 10 Gew.-% bezogen auf Pn von Polycarbonat) der unter a) beschriebenen Pfropfgrundlage gelöst in 13,5 kg Chlorbenzol eingeleitet. Anschließend werden 28 ml (= 2 Mol-%, bezogen auf BPA) N-Ethylpiperidin zugesetzt und 1 h lang nachgerührt. Nach Zugabe von 20 l Methylenchlorid wird die organische Phase abgetrennt, elektrolytfrei gewaschen und nach Abdestillieren des Methylenchlorids bei 240-260° C extrudiert. Es wurden 4 kg Produkt erhalten, mit einer rel. Lösungsviskosität $\eta_{rel}$ = 1,275. Das scheinbare Molekulargewicht des Pfropfcopolymeren (ermittelt durch Gelpermeationschromatographie mit Polycarbonateichung beträgt $\overline{M}n$ = 14659 g/mol, was einem mittleren Polykondensationsgrad p der Polycarbonatseitenäste von 57.7 entspricht.

Beispiel 2

a) Pfropfgrundlage

900 g eines teilhydrierten Polybutadien-Co-Acrylnitril-Kautschuks (Restgehalt an Doppelbindungen 4 %) mit 43 % Acrylnitril und einer Money-Viskosität (1+4) von 75 bei 100° C wird unter den gleichen Bedingungen wie in Beispiel 1a mit Phenol umgesetzt.

Der Bindungsgrad beträgt hier 3,2 Gew.-% Phenol.

Die mittlere Anzahl an seitenständigen Hydroxyphenylgruppen wurde rechnerisch zu 23,8 bestimmt, bei einem Molekulargewicht des Polybutadien-Co-Acrylnitril-Kautschuks, ermittelt durch Gelpermeationschromatographie, von Mn = 70 000 g/mol.

b) Pfropfungsreaktion

Innerhalb von 15 min werden bei 20-25° C unter Rühren 15 g (0,1 Mol) Phosgen in ein Gemisch aus 22,8 g (0,10 Mol) 2,2-Bis-(4-hydroxyphenyl)-propan (BPA), 450 mg (= 3 Mol-%, bezogen auf BPA) p-tert.-Butylphenol; 20 g (0,5 Mol) festes Natriumhydroxid, 400 ml Wasser, 400 ml Methylenchlorid und 2,28 g (= 8,2 Gew.-%, bezogen auf Pn von Polycarbonat) der unter a) beschriebenen Pfropfgrundlage eingeleitet. Anschließend werden 0,14 ml (= 1 Mol-%, bezogen auf BPA) N-Ethylpiperidin zugesetzt und 1 h lang nachgerührt. Die organische Phase wird abgetrennt, elektrolytfrei gewaschen und nach Abdestillieren des Hauptanteils an Methylenchlorid im Vakuumtrockenschrank bei 80° C vom Lösungsmittel befreit. Es wurden 27 g Produkt erhalten, mit einer rel. Viskosität $\eta_{rel}$ = 1,350. Das scheinbare Molekulargewicht des Pfropfcopolymeren (ermittelt durch Gelpermeationschromatographie mit Polycarbonateichung beträgt Mn = 15546 g/mol, was einem mittleren Polykondensationsgrad p der Polycarbonatseitenäste von 61,2 entspricht.

Beispiel 3

a) Pfropfgrundlage

800 g eines EPDM-Harzes (hergestellt aus 46 Masse-% Ethylen, 45 Masse-% Propylen und 9 Masse-% 5-Ethyliden-bicyclo(2.2.1)-hept-2-en, Mooey-Viskosität (1+4) bei 100° C = 90, werden in einem Pomini-Kneter bei einer Knetertemperatur von 60° C und einer Drehzahl von 40 l/min mastiziert. Nach 1 min

werden 72 g Phenol, 7,2 g Methansulfonsäure und weitere 100 g EPDM zugegeben und weitere 8 min gemischt. Die Massetemperatur steigt dabei auf 90-100° C.

Durch vollständige Extraktion des überschüssigen Phenols wird der gebundene Anteil zu 3,2 Gew.-% bestimmt. Im IR-Spektrum zeigt die Bande bei 1600 l/cm die Anwesenheit von aromatischen Seitengruppen an. Die mittlere Anzahl an seitenständigen Hydroxyphenylgruppen wurden rechnerisch zu 27,23 bestimmt, bei einem Molekulargewicht des EPDM, ermittelt durch Gelpermeationschromatographie von Mn = 80 000 g/mol.

b) Pfropfungsreaktion

Innerhalb von 1 Std. werden bei 20-25° C unter Rühren 1,80 kg (187 Mol) Phosgen in ein Gemisch aus 1,026 kg (4,5 Mol) 2,2-Bis-(4-hydroxyphenyl)-propan (BPA), 1,705 g (5,5 Mol) 1,1-Bis-(4-hyroxyphenyl)-3,3,5-trimethylcyclohexan, 9,91 g (0,105 Mol) Phenol, 3,366 kg Kaliumhydroxid, 27 l Wasser, 10 kg Chlorbenzol, 10 kg Methylenchlorid und 254 g der unter a) beschriebenen Pfropfgrundlage gelöst in 18,5 kg Chlorbenzol eingeleitet. Anschließend gelöst in 18,5 kg Chlorbenzol eingeleitet. Anschließend werden 14 ml (= 1 Mol-% bezogen auf BPA) N-Ethylpiperidin zugesetzt und 1 h lang nachgerührt. Nach Zugabe von 20 l Methylenchlorid wird die organ. Phase abgetrennt, elektrolytfrei gewaschen und nach Abdestillieren des Methylenchlorids bei 330° C extrudiert. Es wurden 2,3 kg Produkt erhalten, mit einer rel. Lösungsviskosität $\eta_{rel}$ = 1,355. Das scheinbare Molekulargewicht des Pfropfcopolymeren (ermittelt durch Gelpermeationschromatographie mit Polycarbonateichung beträgt Mn = 29406 g/mol, was einem mittleren Polykondensationsgrad p der Polycarbonatseitenäste von 98,3 entspricht.

Blendherstellung

Beispiel 4

Gemischt wurden 8 Tle eines Polycarbonats (PC) aus Bisphenol A mit einer rel. Lösungsviskosität $\eta_{rel}$ = 1,290 (gemessen in Methylenchlorid bei 5 g/l bei 25° C) und 1 Tl des Pfropfcopolymeren (entspricht 1 Gew.-% EPDM im Blend) durch Compoundierung auf einer ZSK 32 bei 260° C.

Beispiel 5

Wie Beispiel 4, jedoch mit 1 Tl des Pfropfcopolymeren des Beispiels 1 (entspricht 5 Gew.-% EPDM im Blend).

Beispiel 6

a) Pfropfgrundlage (analog DE 365 00 366 A1)

Zu einer Mischung aus 200 g EPDM-Harz (hergestellt aus 65 Masse-% Ethylen, 30 Masse-% Propylen und 5 Masse-% 5-Ethyliden-bicyclo(2.2.1)-hept-2-en, Money-Viskosität (1+4) bei 100° C = 85 und 1800 g o-Dichlorbenzol wird bei 150° C unter Stickstoffbegasung eine Lösung aus 5 g Methansulfonsäure, 200 g Phenol und 200 g o-Dichlorbenzol innerhalb von 15 min zugetropft. Man läßt 4 Std. bei 170-175° C nachreagieren und verdünnt nach Abkühlen auf Raumtemperatur mit 2,8 kg Chlorbenzol. Die organ. Phase wird dreimal mit 5 %iger wäßriger Natronlauge phenolfrei und anschließnd mit Wasser neutral gewaschen (pH = 6,5). Die so erhaltene Lösung wird weiter eingesetzt. Eine aufgearbeitete Probe ergab einen Gehalt an Phenol von 3,1 Gew.-%.

Die mittlere Anzahl an seitenständigen Hydroxylphenylgruppen wurde rechnerisch zu 27 bestimmt, bei einem Molekulargewicht des EPDM, ermittelt durch Gelpermeationschromatographie von Mn = 82 000 g/mol.

b) In situ-Blendherstellung

Innerhalb von 1 Std. werden bei 20-25° C unter Rühren, 2,7 kg (27 Mol) Phosgen in ein Gemisch aus 4,56 kg (20 Mol) 2,2-Bis-(4-hydroxyphenyl)-propan (BPA), 96 g (= 3,3 Mol-%, bezogen auf BPA) p-tert.-Butylphenol, 8 kg Natronlauge (w = 45 %), 40 l Wasser, 12 kg Chlorbenzol und 1214,5 g (= 1 Gew.-% EPDM im fertigen Blend) der unter a) beschriebenen Pfropfgrundlage gelöst in 25 kg Methylenchlorid eingeleitet. Anschließend werden 28 ml (= 1 Mol-%, bezogen auf BPA) N-Ethylpiperidin zugesetzt und 1 h lang nachgerührt. Die organ. Phase wird abgetrennt, elektrolytfrei gewaschen und nach Abdestillierenn des Methylenchlorids bei 280° C extrudiert. Es wurden 4,8 kg Produkt erhalten, mit einer rel. Lösungsvis-

kosität $\eta_{rel}$ = 1,285. Das scheinbare Molekulargewicht des Pfropfcopolymeren (ermittelt durch Gelpermeationschromatographie mit Polycarbonateichung) beträgt Mn = 14213 g/mol, was einem mittleren Polykondensationsgrad p der Polycarbonatseitenäste von 55,9 entspricht.

Beispiel 7

a) Pfropfgrundlage

800 g eines EPDM-Harzes (hergestellt aus 46 Masse-% Ethylen, 45 Masse-% Propylen und 9 Masse-% 5-Ethyliden-bicyclo(2.2.1)-hept-2-en, Money-Viskosität (1+4) bei 100° C=90 werden in einem Pomini-Kneter bei einer Knetertemperatur von 60° C und einer Drehzahl von 40 l/min mastiziert. Nach 1 min werden 72 g Phenol, 7,2 g Methansulfonsäure und weitere 100 g EPDM zugegeben und weitere 8 min gemischt. Die Massetemperatur steigt dabei auf 90-100° C.

Durch vollständige Extraktion des überschüssigen Phenols wird der gebundene Anteil zu 3,2 Gew`-% bestimmt. Im IR-Spektrum zeigt die Bande bei 1600 l/cm die Anwesenheit von aromatischen Seitengruppen an.

b) In situ-Blendherstellung

Innerhalb von 1 Std. werden bei 20-25° C unter Rühren 2,7 kg (27 Mol) Phosgen in ein Gemisch aus 4,56 kg (20 Mol) 2,2-Bis-(4-hydroxyphenyl)-propan (BPA), 98,72 g (= 3,5 Mol-%, bezogen auf BPA) p-tert.-Butylphenol, 8 kg Natronlauge (w=45 %), 40 l Wasser, 35 kg Chlorbenzol und 254 g (= 5 Gew.-% EPDM bezogen auf den hergestellten Blend aus Pn von Polycarbonat) der unter a) beschriebenen Pfropfgrundlage gelöst in 8,8 kg Chlorbenzol eingeleitet. Anschließend werden 28 ml (= 1 Mol-% bezogen auf BPA) N-Ethylpiperidin zugesetzt und 1 h lang nachgerührt. Die organ. Phase wird mit 20 l Methylenchlorid versetzt abgetrennt, elektrolytfrei gewaschen und nach Abdestillieren des Methylenchlorids bei 260-280° C extrudiert. Es wurden 4,2 kg Produkt erhalten, mit einer rel. Lösungsviskosität $\eta_{rel}$ = 1,269. Das scheinbare Molekulargewicht des Pfropfcopolymeren (ermittelt durch Gelpermeationschromatographie mit Polycrbonateichung beträgt Mn=14659 g/mol, was einem mittleren Polykondensationsgrad p der Polycarbonatseitenäste von 57,7 entspricht.

Beispiel 8

a) Pfropfgrundlage

800 g eines EPDM-Harzes (hergestellt aus 41 Masse-% Ethylen, 45 Masse-% Propylen und 9 Masse-% 5-Ethyliden-bicyclo(2.2.1)-hept-2-en, Money-Viskosität (1+4) bei 100° C = 90 werden in einem Pomini-Kneter bei einer Knetertemperatur von 60° C und einer Drehzahl von 40 l/min mastiziert. Nach 1 min werden 72 g Phenol, 7,2 g Methansulfonsäure und weitere 100 g EPDM zugegeben und weitere 8 min gemischt. Die Massetemperatur steigt dabei auf 90-100° C.

Durch vollständige Extraktion des überschüssigen Phenols wird der gebundene Anteil zu 3,2 Gew.-% bestimmt. Im IR-Spektrum zeigt die Bande bei 1600 l/cm die Anwesenheit von aromatischen Seitengruppen an.

b) Reactive Blending (Pfropfherstellung)

Gemischt wurden 9 Tle eines Polycarbonats (PC) aus Bisphenol A mit einer rel. Lösungsviskosität $\eta_{rel}$ = 1,290 (gemessen in Methylenchlorid bei 5 g/l bei 25° C) und 1 Tl. der unter a) beschriebenen Pfropfgrundlage (entspricht 10 Gew.-% EPDM im Blend) durch Compoundierung auf einer ZSK 32 bei 280° C. Es wurden 4,2 kg Produkt erhalten, mit einer rel. Lösungsviskosität $\eta_{rel}$ = 1,270. Das scheinbare Molekulargewicht des Pfropfcopolymeren (ermittelt durch Gelpermeationschromatographie mit Polycarbonateichung beträgt Mn = 12992 g/mol, was einem mittleren Polykondensationsgrad p der Polycarbonatseitenäste von 51,4 entspricht.

Zur Bestimmung der verbesserten Benzinbeständigkeit werden aus den Materialien stabförmige Probekörper 80x10x4 mm gespritzt. Diese werden in Flachlage einer Dreipunktbiegemessung unterworfen ($1_o$=40 mm). Mittels definierter Durchbiegung werden maximale Randfaserdehnungen von $\epsilon_R$ = 0,5, 1, 2, 3 und 4 % erzeugt. Für jede Randfaserdehnung wird ein neuer Prüfkörper verwendet.

Bei jeweils fest eingestellter maximaler Randbiegung wird der so erzeugte Biegezustand in Luft 1 min aufrechterhalten, bevor die Probe mit dem Prüfmedium (Toluol/Isooctan 1:1, bei 20° C) durch Eintauchen in das Medium kontaktiert wird. Sobald durch Einwirkung des Mediums Risse entstehen, setzt ein

Spannungsabfall in der Randfaser ein, der registriert wird. Für eine quantitative Bewertung werden die Spannungswerte nach Kontaktzeiten von 2 und 20 min ermittelt und auf die Anfangsspannung bezogen ($\delta/\delta_o$ in %). Ein Abfall der rel. Spannungswerte auf 0 % bedeutet den Bruch des Prüfkörpers, ein rel. Spannungswert von 100 %, daß keine Quellung im Medium erfolgt ist.

Zum Vergleich werden Prüfkörper aus Bisphenl A-Polycarbonat (BPA-PC) mit reiner rel. Lösungsviskosität von $\eta_{rel}$ = 1,290 sowie ein Copolycarbonat (CoPC) aus 55 Mol-% 1,1-Bis-(4-hydroxyphenyl)-3,3,5-trimethylcyclohexan und 45 Mol-% Bisphenol A mit einer rel. Lösungsviskosität von $\eta_{rel}$ = 1,299 mitgeprüft.

| Beispiel | rel. Biegespannung in % /$\delta/\delta_o$) nach 2/20 min bei $\varepsilon_R$ = 0,5 % | 1 % | 2 % | 3 % | 4 % |
|---|---|---|---|---|---|
| Vergleich | | | | | |
| BPA-PC | 95/0 | 15/0 | 0/0 | 0/0 | 0/0 |
| CoPC | 87/0 | 0/0 | 0/0 | 0/0 | 0/0 |
| Pfropfpolymere | | | | | |
| 1 | 97/93 | 97/90 | 93/80 | 93/80 | 93/80 |
| 3 | 97/91 | 95/83 | 92/83 | 91/81 | 90/74 |
| Schmelzcompounds | | | | | |
| 4 | 95/2 | 34/0 | 5/0 | 0/0 | 0/0 |
| 5 | 97/93 | 94/0 | 81/0 | 79/0 | 80/0 |
| in situ Blends | | | | | |
| 6 | 95/3 | 31/0 | 5/0 | 0/0 | 0/0 |
| 7 | 95/91 | 95/5 | 80/0 | 78/0 | 78/0 |
| Reactive Blending | | | | | |
| 8 | 97/94 | 96/90 | 91/80 | 90/73 | 88/69 |

## Patentansprüche

1. Verwendung von Kautschuken mit 5 bis 60 phenolischen OH-Gruppen, die dadurch erhältlich sind, daß man Kautschuke mit einem Doppelbindungsgehalt zwischen 3 und 250, pro 1.000 C-Atome im Kautschuk, mit Phenolen, gegebenenfalls in Gegenwart eines Katalysators, in Substanz bei Temperaturen zwischen 50 ° C und 150 ° C und Reaktionszeiten zwischen 1 Minute und 30 Minuten umsetzt, als Polymerrückgrate für die Herstellung von Pfropfcopolymeren unter Aufpfropfung von aromatischen Polycarbonaten.

2. Verfahren zur Herstellung von Pfropfcopolymeren aus Polymeren mit phenolischen OH-Gruppen, Diphenolen, Phosgen und Monophenolen in wäßrigalkalischer Phase unter Zusatz eines inerten organischen Lösungsmittels unter den Bedingungen der Zweiphasengrenzflächenpolykondensation, wobei die Menge an Diphenolen und Monophenolen als Kettenabbrecher so gewählt ist, daß Polycarbonatketten mit mittleren Molekulargewichten $\overline{M}n$ (Zahlenmittel, ermittelt durch Gelchromatographie nach vorheriger Eichung) von 2000 g/Mol bis 250 000 g/Mol gebildet werden, dadurch gekennzeichnet, daß man als Polymere mit phenolischen OH-Gruppen Kautschuke mit 5 bis 60 phenolischen OH-Gruppen einsetzt, die dadurch erhältlich sind, daß man Kautschuke mit einem Doppelbindungsgehalt zwischen 3 und 250, pro 100 C-Atome im Kautschuk, mit Phenolen, gegebenenfalls in Gegenwart eines Katalysators, in Substanz bei Temperaturen zwischen 50 ° C und 150 ° C und Reaktionszeiten zwischen 1 Minute und 30 Minuten umsetzt.

3. Pfropfcopolymere, erhältlich nach dem Verfahren des Anspruchs 2.

4. Verwendung der Pfropfcopolymeren des Anspruchs 3 in Mengen von 0,1 Gew.-% bis 35 Gew.-%, bezogen auf Gesamtgewicht an Polycarbonatformmasse, zur Verbesserung der Benzinbeständigkeit von thermoplastischen, aromatischen Polycarbonaten.

5. Mischungen enthaltend
   A) thermoplastische, aromatische Polycarbonate mit $\overline{M}w$ (Gewichtsmittelmolekulargewicht, ermittelt durch Gelpermeationschromatographie durch vorheriger Eichung) von 15.000 bis 40.000 und
   B) den Pfropfcopolymeren des Anspruchs 3, wobei Komponente A) in Mengen von 65 Gew.-% bis 99.9 Gew.-% und Komponente B) in Mengen von 0,1 Gew.-% bis 35 Gew.-% vorliegen und die Summe der Komponenten A) + B) in den Mischungen jeweils 100 Gew.-% ergeben.

6. Verfahren zur Herstellung der Mischungen des Anspruchs 5, dadurch gekennzeichnet, daß man die Komponente A) und die Komponente B) oberhalb der Erweichungstemperatur der jeweiligen Komponente A) vermischt oder Lösungen der Polycarbonatkomponente A) mit Lösungen der Pfropfcopolymerkomponente B) vermischt und anschließend das Gemisch durch Ausdampfen in bekannter Weise von Lösungsmittel befreit.

7. Verfahren zur Herstellung von Polycarbonatgemischen bestehend aus Polycarbonatkomponenten A) und Pfropfcopolymerkomponenten B), und zwar durch Umsetzung von Diphenolen, monofunktionellen Kettenabbrechern, Phosgen und Polymeren mit phenolischen OH-Gruppen unter den Bedingungen der Zweiphasengrenzflächenkondensation in wäßrig alkalischer Phase und inertem organischem Lösungsmittel, gegebenenfalls in Anwesenheit eines Katalysators bei Reaktionstemperaturen zwischen 0 ° C und 40 ° C und innerhalb Reaktionszeiten von 5 Minuten bis 60 Minuten, dadurch gekennzeichnet, daß man
   a) bei einer vorgegebenen Menge an OH-Gruppen-haltigen Polymeren,
   b) Diphenole in Mengen von mehr als 1000 Mol pro OH-Gruppe des OH-Gruppen-haltigen Polymeren einsetzt,
   c) Kettenabbrecher in Mengen von mehr als 1 Mol, pro OH-Gruppe des OH-Gruppen-haltigem Polymeren einsetzt, wobei die Menge an zusätzlichem Kettenabbrecher zur Herstellung der Polycarbonatkomponente A) aus den überschüssigen Diphenolen gemäß b) in bekannter Weise so zu bemessen ist, daß Molekulargewichte $\overline{M}w$ für die Polycarbonatkomponente A) von 15 000 bis 40 000 gebildet werden, und
   d) als OH-Gruppen-haltige Polymere Kautschuke mit 5 bis 60 phenolischen OH-Gruppen einsetzt,

   und nach beendeter Reaktion in bekannter Weise nach Abtrennung der wäßrigen Phase aufarbeitet, wobei die einzusetzenden OH-Gruppen-haltigen Kautschuke dadurch erhältlich sind, daß man Kautschuke mit einem Doppelbindungsgehalt zwischen 3 und 250 pro 1000 C-Atome im Kautschuk, mit Phenolen, gegebenenfalls in Gegenwart eines Katalysators, in Substanz bei Temperaturen zwischen 50 ° C und 150 ° C und Reaktionszeiten zwischen 1 Minute und 30 Minuten umsetzt.

8. Polycarbonatgemische, erhältlich nach dem Verfahren des Anspruchs 7.

9. Verfahren zur Modifizierung von thermoplastischen, aromatischen Polycarbonaten mit $\overline{M}w$ (Gewichtsmittelmolekulargewicht, ermittelt durch Gelpermeationschromatographie nach vorheriger Eichung) von 15.000 bis 40.000, dadurch gekennzeichnet, daß man Kautschuke mit 5 bis 60 phenolischen OH-Gruppen in Mengen von 0,1 Gew.-% bis 20 Gew.-%, bezogen auf Gesamtgewicht an thermoplastischem aromatischen Polycarbonat und Kautschuk, bei Temperaturen zwischen 280° C und 350° C zwischen 1 und 3 Minuten ohne Verwendung von Katalysatoren vermischt und das Gemisch anschließend extrudiert und in üblicher Weise aufarbeitet, wobei die OH-Gruppen-haltigen Kautschuke dadurch erhältlich sind, daß man Kautschuke mit einem Doppelbindungsgehalt zwischen 3 und 250, pro 1000 C-Atome im Kautschuk, mit Phenolen, gegebenenfalls in Gegenwart eines Katalysators, in Substanz bei Temperaturen zwischen 50° C und 150° C und Reaktionszeiten zwischen 1 Minute und 30 Minuten umsetzt.

10. Modifizierte Polycarbonatformmassen erhältlich nach dem Verfahren des Anspruchs 9.

**Patentansprüche für folgenden Vertragsstaat: ES**

1. Verfahren zur Herstellung von Pfropfcopolymeren aus Polymeren mit phenolischen OH-Gruppen, Diphenolen, Phosgen und Monophenolen in wäßrigalkalischer Phase unter Zusatz eines inerten organischen Lösungsmittels unter den Bedingungen der Zweiphasengrenzflächenpolykandensation, wobei die Menge an Diphenolen und Monophenolen als Kettenabbrecher so gewählt ist, daß Polycarbonatketten mit mittleren Molekulargewichten $\overline{M}n$ (Zahlenmittel, ermittelt durch Gelchromatographie nach vorheriger Eichung) von 2000 g/Mol bis 250 000 g/Mol gebildet werden, dadurch gekennzeichnet, daß man als Polymere mit phenolischen OH-Gruppen Kautschuke mit 5 bis 60 phenolischen OH-Gruppen einsetzt, die dadurch erhältlich sind, daß man Kautschuke mit einem Doppelbindungsgehalt zwischen 3 und 250, pro 100 C-Atome im Kautschuk, mit Phenolen, gegebenenfalls in Gegenwart eines Katalysators, in Substanz bei Temperaturen zwischen 50° C und 150° C und Reaktionszeiten zwischen 1 Minute und 30 Minuten umsetzt.

2. Verfahren zur Herstellung der Mischungen enthaltend
   A) thermoplastische, aromatische Polycarbonate mit $\overline{M}w$ (Gewichtsmittelmolekulargewicht, ermittelt durch Gelpermeationschromatographie durch vorheriger Eichung) von 15.000 bis 40.000 und
   B) den Pfropfcopolymeren des Anspruchs 3, wobei Komponente A) in Mengen von 65 Gew.-% bis 99.9 Gew.-% und Komponente B) in Mengen von 0,1 Gew.-% bis 35 Gew.-% vorliegen und die Summe der Komponenten A) + B) in den Mischungen jeweils 100 Gew.-% ergeben,

   dadurch gekennzeichnet, daß man die Komponente A) und die Komponente B) oberhalb der Erweichungstemperatur der jeweiligen Komponente A) vermischt oder Lösungen der Polycarbonatkomponente A) mit Lösungen der Pfropfcopolymerkomponente B) vermischt und anschließend das Gemisch durch Ausdampfen in bekannter Weise von Lösungsmittel befreit,

3. Verfahren zur Herstellung von Polycarbonatgemischen bestehend aus Polycarbonatkomponenten A) und Pfropfcopolymerkomponenten B), und zwar durch Umsetzung von Diphenolen, monofunktionellen Kettenabbrechern, Phosgen und Polymeren mit phenolischen OH-Gruppen unter den Bedingungen der Zweiphasengrenzflächenkondensation in wäßrig alkalischer Phase und inertem organischem Lösungsmittel, gegebenenfalls in Anwesenheit eines Katalysators bei Reaktionstemperaturen zwischen 0° C und 40° C und innerhalb Reaktionszeiten von 5 Minuten bis 60 Minuten, dadurch gekennzeichnet, daß man
   a) bei einer vorgegebenen Menge an OH-Gruppen-haltigen Polymeren,
   b) Diphenole in Mengen von mehr als 1000 Mol pro OH-Gruppe des OH-Gruppen-haltigen Polymeren einsetzt,
   c) Kettenabbrecher in Mengen von mehr als 1 Mol, pro OH-Gruppe des OH-Gruppen-haltigem Polymeren einsetzt, wobei die Menge an zusätzlichem Kettenabbrecher zur Herstellung der Polycarbonatkomponente A) aus den überschüssigen Diphenolen gemäß b) in bekannter Weise so zu bemessen ist, daß Molekulargewichte $\overline{M}w$ für die Polycarbonatkomponente A) von 15 000 bis 40 000 gebildet werden, und
   d) als OH-Gruppen-haltige Polymere Kautschuke mit 5 bis 60 phenolischen OH-Gruppen einsetzt,

   und nach beendeter Reaktion in bekannter Weise nach Abtrennung der wäßrigen Phase aufarbeitet, wobei die einzusetzenden OH-Gruppen-haltigen Kautschuke dadurch erhältlich sind, daß man Kautschuke mit einem Doppelbindungsgehalt zwischen 3 und 250 pro 1000 C-Atome im Kautschuk, mit Phenolen, gegebenenfalls in Gegenwart eines Katalysators, in Substanz bei Temperaturen zwischen 50 ° C und 150 ° C und Reaktionszeiten zwischen 1 Minute und 30 Minuten umsetzt.

4. Verfahren zur Modifizierung von thermoplastischen, aromatischen Polycarbonaten mit $\overline{M}w$ (Gewichtsmittelmolekulargewicht, ermittelt durch Gelpermeationschromatographie nach vorheriger Eichung) von 15.000 bis 40.000, dadurch gekennzeichnet, daß man Kautschuke mit 5 bis 60 phenolischen OH-Gruppen in Mengen von 0,1 Gew.-% bis 20 Gew.-%, bezogen auf Gesamtgewicht an thermoplastischem aromatischen Polycarbonat und Kautschuk, bei Temperaturen zwischen 280 ° C und 350 ° C zwischen 1 und 3 Minuten ohne Verwendung von Katalysatoren vermischt und das Gemisch anschließend extrudiert und in üblicher Weise aufarbeitet, wobei die OH-Gruppen-haltigen Kautschuke dadurch erhältlich sind, daß man Kautschuke mit einem Doppelbindungsgehalt zwischen 3 und 250, pro 1000 C-Atome im Kautschuk, mit Phenolen, gegebenenfalls in Gegenwart eines Katalysators, in Substanz bei Temperaturen zwischen 50 ° C und 150 ° C und Reaktionszeiten zwischen 1 Minute und 30 Minuten umsetzt.